# EUROPEAN PATENT SPECIFICATION

(11) **EP 1 217 890 B1**
(45) Date of publication and mention of the grant of the patent: **29.10.2003**
(21) Application number: 00956754.6
(22) Date of filing: 31.08.2000
(51) Int. Cl.: A01N 35/02

(54) **SYNERGISTIC ANTIMICROBIAL COMPOSITIONS**
SYNERGISTISCHE ANTIMIKROBIELLE ZUSAMMENSETZUNGEN
COMPOSITIONS ANTIMICROBIENNES SYNERGIQUES

(30) Priority: 02.09.1999 IL 13170899
(43) Date of publication of application: 03.07.2002
(73) Proprietor: Dor Chemicals Ltd., Haifa 26110 (IL); Bar, Zvi, Hof Ashkelon 79304 (IL)
(72) Inventor: KRITZMAN, Giora, 76103 Rehovot (IL)
(74) Representative: Vossius, Volker, Dr.
(86) International application number: IL0000520
(87) International publication number: WO01015530

(56) References cited:
- EP-A- 0 336 489
- FR-A- 1 476 579
- GB-A- 1 521 667
- DATABASE CROPU [Online] G.R.HANKS: "Yield and basal rot in narcissus bulbs treated with post-lifting fungicide sprays" retrieved from STN-INTERNATIONAL, accession no. 1994-88044 CROPU XP002156261 & ANN.APPL.BIOL., vol. 124, Suppl., 1994, pages 66-67,
- DATABASE CROPU [Online] G.R.HANKS ET AL.: "Evaluation of a peroxyacetic acid disinfectant in hot-water treatment for control of basal rot (Fusarium oxysporum f.sp. narcissi) and stem nematode (Ditylenchus dipsaci) in narcissus" retrieved from STN-INTERNATIONAL, accession no. 1999-84803 CROPU XP002156262 & J PHYTOPATHOL., vol. 147, no. 5, 1999, pages 271-279,
- DATABASE CAB [Online] CAB INTERNATIONAL, WALLINGFORD, OXON, GB; G.R.HANKS ET AL.: "Pest and disease control in UK narcissus growing: some aspects of recent research" retrieved from STN-INTERNATIONAL, accession no. 1998:166774 CABA XP002156263 & ACTA HORTICULTURAE, vol. II, no. 430, 1997, pages 611-618,
- DATABASE WPI Section Ch, Week 197947 Derwent Publications Ltd., London, GB; Class C02, AN 1979-84982B XP002156264 & JP 54 132203 A (MITSUI TOATSU CHEM INC), 15 October 1979 (1979-10-15)

## Description

### Field of the Invention

The present invention relates to synergistic antimicrobial compositions with a wide spectrum of activity, exhibiting deep penetration into the soil, and to methods for soil and substrate disinfestation.

### Background of the Invention

Methods for inhibiting microbial growth have been widely disclosed in the art. For instance, U.S. Patents Nos. 3,833,951, 3,887,922 and 3,644,380 disclose 2-bromo-2-bromomethylglutaronitrile, which is used as an antibacterial, antifungal agent. Formaldehyde is a well-known and widely used compound. Both 2-bromo-2-bromomethylglutaronitrile and formaldehyde are known individually as antimicrobial agents.

The mixture comprising the two abovementioned compounds also has antimicrobial activity. U.S. Patent No. 3,699,231 discloses a method for inhibiting microbial growth in substances and a biocidal composition which contains sodium dimethyldithiocarbamate and formaldehyde.

U.S. Patent No. 3,699,231, disdoses a biocidal composition which contains a mixture of at least one aldehyde, e.g. paraformaldehyde of the formula (HO(CH₂O)H), and at least one carbamate.

U.S. Patent No. 4,356,179 relates to a method of preventing and treating diseases in chestnut trees and in peach, plum and black cherry, caused by fungi or bacteria, and comprises an aqueous solution containing an amount of formaldehyde effective against said fungi or bacteria.

Thierry Mateille in "Comparative host tissue reactions of *Musa acuminata* (AAA Group) cvs Poyo and Gros Michel roots to three banana-parasitic nematodes", Ann. Appl. Biol, (1994), 124, 65-73, describes a comparative histopathological investigation in which Poyo and Gros Michel cultivars of *Musa acuminata* (AAA triploid), were inoculated with various parasites and were gown in a greenhouse under tropical conditions. The histopathological studies show that the responses of Musa acuminata depend on the nematode species and are cultivar-specific.

G.R. Hanks and C.A. Linfield, in "Evaluation of a Peroxyacetic Acid Disinfectant in Hot-water Treatment for the Control of Basal Rot (*Fusarium oxysporum*, f.sp. *Narcissi*) and Stein Nematode (Ditylenchus dipsaci) in Narcissus", J. Phytopathology, 147, 271-279 (1999), evaluate peroxyacetic acid *in vitro* and in a field trial as a possible alternative to formaldehyde in hot water treatment (HWT) of narcissus bulbs for the control of stem nematode and basal rot. In the field trial narcissus bulbs were dipped, after having been contaminated, into an HWT bath in which the disinfectant and fungicide chemicals were dissolved, said chemicals comprising thiabendazole, formaldehyde and peroxyacetic acid. The temperatures and durations of the HWT needed to kill nematodes in the bulbs were determined. Adding formaldehyde or peroxyacetic acid to the bath achieved 100% kill of free-swimming nematodes.

The same authors in "Pest and Disease Control in U.K Narcissus Growing: Some Aspects of Recent Research", in Acta Horticulturae, No. 430, Vol. II, pages 611-618, describe several tests in which a peroxyacetic acid-based disinfectant was evaluated as a replacement for formaldehyde in HWT. Thiabendazole fungicide was also used in the tests.

UK Patent Specification 1 521 667 describes a fungicidal mixture comprising a imidazole compound, or the reaction product thereof with sulfonic acids, and a compound selected from chloracetamide, N-hydroxymethylchloroacetamide, N-hydroxymethylethanolamine and additional condensation products of formaldehyde melamine and of formaldehyde and primary hydroxyalkylamines.

JP 54132203 describes the treatment of wood bars in wet stage with a fungicidal agent and a wood preservative agent, wherein the fungicidal agent can be 2-(4-thiazolyl) benzimidazole and the wood preservative agent can be formaldehyde.

None of the aforesaid prior art addresses the control of soil-borne pathogens or discloses means for such a control.

EP-A 0 336 489 describes synergistic antifungal compositions containing Imazalil and propiconazole and methods of antifungally treating plants of the loci thereof comprising the combined administration of Imazalil and propiconazole.

All prior art compositions present severe disadvantages, either with respect to efficacy, or environmental problems, or both. The present invention provides a wide spectrum of activities to control soil-borne pathogens of bacteria, fungi and nematodes and can be used for a very wide range of crops, and gives control to soil depths unattainable by the prior art. It can be used in the open fields, as wall as in greenhouses. Another advantage of the invention is that there is no need to cover the treated soil with plastic sheets, as the compositions of the invention are environmentally friendly.

It is therefore an object of the present invention to provide synergistic antimicrobial compositions that overcome the shortcomings of prior art compositions, in respect of both efficacy and depth of penetration.

It is another object of the invention to provide antimicrobial compositions with wide spectrum, which are environmentally friendly.

Other objects and advantages of the invention will appear as the description proceeds.

### Summary of the Invention

The present invention relates to synergistic antimicrobial admixtures with a wide spectrum of activity, permitting a deep penetration into the soil and leaving no residue.

According to the invention there are provided new and improved biocidal compositions containing Formalin, together with Imazalil (±allyl (RS)-1-(2,4-dichlorophenyl)-2-imidazol-1-ylethyl ether) or a mixture of Imazalil with Pitrizate (Thiabendazol-2(thiazol-4-yl) benzimidazole).

Furthermore, according to the present invention there is provided a method for inhibiting microbial growth and for preventing or treating a microorganism related disease in vegetable growth, comprising applying to the vegetable growth or to the soil a composition containing Formalin, together with Imazalil and/or with Pitrizate.

Synergistic compositions comprising Imazalil and Formalin will be referred to hereinafter as Fordor 101 (or F-101), for the sake of brevity. Similarly, compositions containing Formalin and Pitrizate will be referred to as Fordor 102 (or F-102), and compositions containing Formalin, Imazalil and Pitrizate, will be referred to as Fordor 103 (or F-103).

The ratio between one unit of Formalin to the other active compounds (i.e., Imazalil, or Pitrizate or their mixtures) is between 100 ppm of Imazalil or Pitrizate or their mixture for one part of Formalin, and up to to 60% by weight. The ranges for the concentrations of the various mixtures in inert carriers is 70% or less.

The amount of Imazalil formulation to be added to Formalin is typically, but non-limitatively, in the range of 50 to 100 ml in 200 to 500 liter Fordor 37, which can be applied to 1000 m² of soil. Similarly, for Pitrizate, between 500 and 2000 gr. of Pitrizate composition can typically be used in 200 to 500 liters of Formalin, to cover 1000 m² of soil. A convenient Formalin composition to be used for the purposes of the invention is Fordor 37 (ex Dor Chemicals), which contains formaldehyde 36.5±1%, methanol 3-8%, additives 0-1%, and H₂O to 100%.

Additional active ingredients can be formulated together with the compositions of the invention or the compositions used in the methods of the invention, to provide additional activity. Illustrative and non-limitative active ingredients of this type are, e.g., the following:
· Organophosphorus nematicides;
· Organophosphate nematicides;
· Organothiophosphate nematicides;
· unclassified nematicides;
· Fenamiphos;
· Cadusafos;
· Dezomet.

The methods and compositions of the invention are useful in controlling the harmful effects of a variety of microorganisms and pests that affect crops. Microorganisms which are effectively controlled by the methods and compositions of the invention include, but are not limited to: a) Bacteria e.g.: Streptomyces sp., Pseudomonas spp., Erwinia spp., Xanthomonas spp., Clavibacter spp., Corynebacterium spp., b) Soil-borne Fungi, e.g.: Pythium spp., Fusarium spp., Verticillium spp., Colletotrichum spp., Helminthosporium spp., Rhizoctonia spp., Sclerotinia spp., Sclerotium spp., Botrytis spp., Monosporoascus, Olpidium spp., Phytophthora spp. and more; and c) nematodes spp. ("nematodes", in this context, being limited to those of the group of free living nematodes or migratory nematodes only), when the crop to be treated is potatoes; Streptomyces sp. and Pythium sp. when the crop is peanuts; Pythium sp., Erwinia sp., and Streptomyces sp. when the crop is carrots; Clavibacter pseudomonas corrugate, Erwinia sp., nematodes, Pythium sp. and Pseudomonas solanacearum when the crop is tomatoes; and pseudomona corrugate, Clavibacter, Erwinia sp., Xanthomonas sp., Pythium sp. and nematodes, when the crop is pepper.

The compositions and methods of the invention can be used to control harmful microorganisms in a variety of crops. Illustrative and non-limitative examples of crops which can benefit from the invention include those that are affected by soil borne pathogens (bacteria, fungi or nematodes) such as vegetables, trees, flowers and ornamentals, cereals, legumes, fresh spices (herbs) in the open fields or in greenhouses and container media.

The compositions can be administered in many different ways, such as during irrigation, by spraying, incorporation into the soil, etc.

The synergistic antimicrobial combination can be used in solid formulations, including powder or granular materials, or in liquids, such as in solution or emulsion. The carriers are chosen from liquids - water, alcohols - or solids - paraformaldehyde, urea formaldehyde - with other solid compounds, salts, inert materials, solid basic (which increase the pH when dissolved) compounds, organic or inorganic.

The compositions can be prepared by mixing the components together, or the synergistic antimicrobial combination of active ingredients may be used in combination with other antimicrobial materials, the antimicrobial combination, containing the combination as the essential, active ingredient, which Formulations also contain a variety of carrier materials, such as talc and the like, or water, or various other organic liquids.

The term "soil" as used herein is intended to include all media, capable of supporting growth of plants, such as sand, compost and manure.

The synergistic antimicrobial combination as described above should be applied in effective concentrations of the active ingredients. Application amounts in the field range between 100 lit/1000 m² and 600 lit/1000 m². Paraformaldehyde and urea formaldehyde concentrations range between 40 kg/1000 m² and 200 kg/1000 m².

In order to obtain effective results, direct contact between the synergistic antimicrobial composition and the pathogen is of course required. According to the present invention, the antimicrobial methods are beneficial not only by activity against bacteria and fungi responsible for inhibiting growth, and destruction but in that it can improve crop production.

All the above characteristics and advantages of the invention will be further understood through the following illustrative and non-limitative detailed description of preferred embodiments thereof.

### General Procedure

An illustrative general application procedure is as follows. The soil should be after deep subsoiler with no clods and wet to the depth of at least 5 cm. In greenhouses, the application will be done after cleaning from leftovers.

A. A Sprayboom with two beams with " t-jet " nozzles can be used, which should be in front and close-fitting to the rotavator. The rotavator should work to the depth of 10 cm., and behind it there should be a roller to seal the soil. In an hour the field should be watered to the depth of 30-40 cm.

B. The soil disinfection should be done through a disconnected wipe. The injection should be at the point were the water goes into the line. It should be pumped into the line with a pressure higher than 1 atm. Then the water pressure would be in proportion to the water flow and would not be more than 0.7.

The Fordor 37, which is one of the components, must be of a formulation suitable for agriculture, since agricultural grade Fordor 37 provides safety of the application, and later rapid degradation into non-toxic compounds.

### Experimental Procedure

The tested materials (Fordor 37, Fordor 37 with the different additives or water as control) were applied on the top of test columns in an amount equivalent to a commercial application of 250 liter/1000m². The columns were designed as two pieces with a longitudinal cut which, when combined together, had the dimensions of 15 x 15 x 40 cm. By using such columns, it was possible to open them after the desired time from the application, and to take samples of soil from each soil level (depth). In addition, the media passing through the columns were collected at different times for the purpose of checking for residual activity against tested organisms.

In all experiments reported below, the following components were used:

Imazalil (ex Scipec, Israel, 950/HZ 86), in 47% active compound formulation. In the tested formulations 100 ml of Imazalil were used for each 250 liter of Fordor 37, including when both Imazalil and Pitrizate were used together.

Pitrizate (ex Assia Rizel, Israel, 295/HZ 76), in 43% active compound formulation. in the tested formulations 2000 gr. of Pitrizate were used for each 250 liter of Fordor 37 per 1000 m².

The results, unless otherwise indicated are in CFU per gram of soil. Statistical computations were carried out using sigma stat and sigma plot software.

### THE EXPERIMENTS

All the experiments were done 3 times in 4 replications. The source of soil tested was a field with a known history of plant diseases such as Streptomyces (potato scab), and fungi such as Verticillium or Fusarium.

In each experiment the following was tested:
1) Water as a control.
2) Fordor 37 without additives.
3) The additive material in water as a carrier.
   The additives: 101 = Imazalil
   The additives: 102 = Pitrizate
   The additives: 103 = Imazalil + Pitrizate
4) Fordor 37 + the additive.
   F-101: Fordor 37 + Imazalil
   F-102: Fordor 37 + Pitrizate
   F-103: Fordor 37 + Imazalil + Pitrizate

### Example 1

The various compositions were applied to columns, as described above with reference to the general procedures. Results are shown in Table I and relate to the effect of the treatment on the population of Fusarium, Aspergillus, Verticillium and Streptomyces inoculated into different fractions collected under the columns and supplemented with all the chemical needs for the support of growth.

**Table I**

| **Fraction No.** | | | | | |
|---|---|---|---|---|---|
| **Treatment and pathogen** | **1 % growth** | **2 % growth** | **3 % growth** | **4 % growth** | **5 % growth** |
| ***Fusarium*** | | | | | |
| Water | 100 | 100 | 100 | 100 | 100 |
| Fordor 37 | 33 | 32 | 33 | 34 | 46 |
| Water + 101 | 32 | 34 | 35 | 8 | 29 |
| F-101 | 4 | 0 | 0 | 0 | 59 |
| Water + 102 | 37 | 32 | 36 | 24 | 89 |
| F-102 | 32 | 0 | 0 | 0 | 96 |
| Water + 103 | 29 | 35 | 30 | 10 | 68 |
| F-103 | 0 | 0 | 0 | 0 | 74 |

| ***Aspergillus*** | | | | | |
|---|---|---|---|---|---|
| Water | 100 | 100 | 100 | 100 | 100 |
| Fordor 37 | 33 | 30 | 32 | 32 | 83 |
| Water + 101 | 30 | 30 | 10 | 10 | 91 |
| F-101 | 0 | 5 | 0 | 0 | 88 |
| Water + 102 | 30 | 30 | 30 | 10 | 90 |
| F-102 | 31 | 0 | 0 | 0 | 71 |
| Water + 103 | 30 | 30 | 30 | 24 | 66 |
| F-103 | 7 | 0 | 0 | 0 | 87 |

| ***Verticillium*** | | | | | |
|---|---|---|---|---|---|
| Water | 100 | 100 | 100 | 100 | 100 |
| Fordor 37 | 68 | 70 | 72 | 67 | 100 |
| Water + 101 | 27 | 25 | 28 | 25 | 74 |
| F-101 | 10 | 0 | 0 | 0 | 94 |
| Water + 102 | 51 | 31 | 30 | 30 | 82 |
| F-102 | 0 | 0 | 0 | 0 | 69 |
| Water + 103 | 89 | 41 | 40 | 29 | 70 |
| F-103 | 0 | 0 | 0 | 0 | 57 |

| ***Streptomyces*** | | | | | |
|---|---|---|---|---|---|
| Water | 100 | 100 | 100 | 100 | 100 |
| Fordor 37 | 0 | 0 | 0 | 9 | 97 |
| Water + 101 | 100 | 100 | 100 | 100 | 100 |
| F-101 | 0 | 0 | 0 | 5 | 100 |
| Water + 102 | 100 | 100 | 100 | 100 | 100 |
| F-102 | 0 | 0 | 0 | 0 | 93 |
| Water + 103 | 100 | 100 | 100 | 100 | 300 |
| F-103 | 0 | 0 | 0 | 6 | 100 |

The results are given in % growth, which is the growth of microorganisms obtained in the treated soil, relative to that obtained in the control soil in which only water was used. The synergistic effect of the compositions of the invention is clearly seen. For instance, looking at the results for Aspergillus it is seen that the effect of Fordor 37 and of Imazalil in water are essentially similar, where both reduce the relative % of microbial growth (relative to water as 100%) to the order of 30% in the first four fractions (except in the first fraction of Imazalil in water), while F-101 reduces it essentially to zero.

### Example 2

The effect of the treatment on the population of Fusarium, Aspergillus, and Streptomyces was studied at different soil depths. Tests were carried out by adding the antimicrobial compositions to the soil at different depths (columns experiments) in concentrations of 1000 ppm (parts per million). The results are reported in Table II below. Microorganisms used in the tests were: Fusarium, Aspergillus, Verticillium and Streptomyces.

**Table II**

| | **Soil Depth (cm) / Population growth** | | | | |
|---|---|---|---|---|---|
| **Treatment & pathogen** | **5 cm CPU/gr soil** | **10 cm CFU/gr soil** | **20 cm CFU/gr soil** | **30 cm CFU/gr soil** | **40 cm CFD/gr soil** |
| ***Fusarium*** | | | | | |
| Water | 925 | 1000 | 1131 | 980 | 995 |
| Fordor 37 | 316 | 380 | 400 | 377 | 341 |
| Water + 101 | 177 | 180 | 163 | 155 | 810 |
| F-101 | 10 | 48 | 0 | 0 | 0 |
| Water + 102 | 400 | 355 | 280 | 312 | 300 |
| F-102 | 5 | 6 | 0 | 0 | 0 |
| Water + 103 | 180 | 120 | 110 | 100 | 93 |
| F-103 | 13 | 0 | 0 | 0 | 0 |

| ***Aspergillus*** | | | | | |
|---|---|---|---|---|---|
| Water | 280 | 310 | 188 | 240 | 200 |
| Fordor 37 | 190 | 200 | 135 | 170 | 160 |
| Water + 101 | 50 | 66 | 70 | 68 | 100 |
| F-101 | 10 | 0 | 0 | 0 | 0 |
| Water + 102 | 66 | 48 | 50 | 37 | 44 |
| F-102 | 0 | 0 | 0 | 0 | 0 |
| Water + 103 | 16 | 22 | 18 | 10 | 25 |
| F-103 | 5 | 0 | 0 | 3 | 0 |

| ***Verticillium*** | | | | | |
|---|---|---|---|---|---|
| Water | 37 | 44 | 30 | 12 | 10 |
| Fordor 37 | 58 | 60 | 55 | 42 | 38 |
| Water + 101 | 58 | 33 | 10 | 10 | 20 |
| F-101 | 17 | 0 | 0 | 0 | 5 |
| Water + 102 | 11 | 16 | 12 | 10 | 0 |
| F-102 | 0 | 0 | 0 | 0 | 6 |
| Water + 103 | 10 | 10 | 16 | 10 | 0 |
| F-103 | 0 | 0 | 0 | 0 | 0 |

| ***Streptomyces*** | | | | | |
|---|---|---|---|---|---|
| Water | 120000 | 12350 | 13000 | 11980 | 12400 |
| Fordor 37 | 10 | 0 | 0 | 0 | 0 |
| Water + 101 | 13200 | 13124 | 13504 | 12980 | 13400 |
| F-101 | 0 | 0 | 0 | 0 | 10 |
| Water + 102 | 12790 | 12500 | 13267 | 13000 | 13780 |
| F-102 | 11 | 0 | 0 | 0 | 0 |
| Water + 103 | 13500 | 12430 | 12000 | 12200 | 12670 |
| F-103 | 0 | 44 | 0 | 0 | 0 |

### Example 3

The tested materials (such as Fordor 101, which comprises Imazalil and Formalin) were applied into the soil. The size of the plots were 36 m x 18 m. The pattern of each experiment was water as a control in an amount of 250 liter/1000 m²; Fordor 37 in an amount of 375 liter/1000 m²; and Fordor 101 in an amount of 250 liter/1000 m² during irrigation of 60 m³ water/1000 m².

The results are related to the effect of treatment on the population of fungi and in the potato crop and agricultural plants in the fields. After 80 days and 115 days from the starting point, samples of plants were checked for the presence of Verticillium wilt. The results obtained with Fordor 37 and Fordor 101 treatment on the population of petioles and fungi showed that plants treated with Fordor 101 showed an incidence of Verticillium wilt between 8 and 14%, those treated with Fordor 37 an incidence of 26%, and the control (water irrigation only) were 45% infested.

As to Verticillium, treatment with Fordor 101 reduced the percentage of infected plants to a mere 0.45 - 1.2%, from the 34.39% infected plants present in the control. Application of Fordor 37 reduced the percentage of infected plants to 11.24%.

All the above description and examples of preferred embedments has been provided for the purpose of illustration, and is not intended to limit the invention in any way, except as defined in the appended claims. Many changes can be carried out in the compositions described above. For instance, many microbially active or inert additives can be added to the compositions, and the compositions can be provided in different carriers. Furthermore, the compositions can be applied to different crops and environments, using various methods and techniques, all without exceeding the scope of the invention.

## Claims

1. A method for inhibiting microbial growth and for preventing or treating a microorganism related disease in vegetable growth, comprising applying to the vegetable growth or to the soil an antimicrobial composition comprising a combination of antimicrobially effective amounts of active compounds, which are:
a) Formalin and
b) between 100 ppm of Imazalil or Pitrizate, or a mixture thereof, for one part of Formalin, and up to 60% by weight.

2. A method according to claim 1, wherein the active compounds are contained in inert carrier materials.

3. A method according to claim 1 or 2, wherein the active compounds are Formalin and Imazalil.

4. A method according to claim 1 or 2, wherein the active compounds are Formalin and Pitrizate.

5. A method according to claim 1 or 2, wherein the active compounds are Formalin and a mixture of Imazalil and Pitrizate.

6. A method according to claim 2, wherein the inert carrier is paraformaldehyde, urea formaldehyde or a mixture thereof.

7. A method according to claim 2, wherein the inert carrier is talc.

8. A method according to claim 2, wherein the inert carrier is an organic solvent.

9. A method according to claims 2 to 8 wherein the amount of inert carrier is up to 70% by weight.

10. A method according to any one of claims 1 to 9, wherein the antimicrobial composition further comprises one or more compound(s) selected from:
• Organophosphorus nematicides;
• Organophosphate nematicides;
• Organothiophosphate nematicides;
• unclassified nematicides;
• Fenamiphos;
• Cadusafos;
• Dezomet.

11. A method according to any one of claims 1 to 10, wherein the antimicrobial composition is applied to the soil by spraying or by irrigation.

12. A method according to any one of claims 1 to 10, wherein the diseased area is treated with an amount of antimicrobial composition of between 100 liters per 1000 m² to 600 liters per 1000 m².

13. A method according to any one of claims 1 to 10, wherein the diseased area is treated with a composition comprising an amount of paraformaldehyde and urea formaldehyde of between 40 kg/1000 m² and 200 kg/1000 m².

14. An antimicrobial composition comprising a combination of antimicrobially effective amounts of active compounds, which are:
a) Formalin and
b) between 100 ppm of Imazalil or of a mixture thereof with Pitrizate, for one part of Formalin, and up to 60% by weight.

15. An antimicrobial composition according to claim 14, wherein the active compounds are contained in inert carrier materials.

16. An antimicrobial composition according to claim 15, wherein the inert carrier is chosen from paraformaldehyde, urea formaldehyde, talc, an organic solvent, or a mixture thereof.

17. An antimicrobial composition according to claims 15 or 16 wherein the amount of inert carrier is up to 70% by weight.

18. A composition according to any one of claims 14 to 17, further comprising one or more compound(s) selected from:
• Organophosphorus nematicides;
• Organophosphate nematicides;
• Organothiophosphate nematicides;
• unclassified nematicides;
• Fenamiphos;
• Cadusafos;
• Dezomet.

19. Use of an antimicrobial composition, comprising a combination of antimicrobially effective amounts of active compounds, which are:
a) Formalin and
b) between 100 ppm of Imazalil or Pitrizate, or a mixture thereof, for one part of Formalin, and up to 60% by weight, for application to vegetable growth or to the soil in order to inhibit microbial growth and to prevent or treat microorganism-related disease in said vegetable growth.

## Patentansprüche

1. Verfahren zur Hemmung von mikrobiellem Wachstum und zur Vermeidung oder Behandlung einer Mikroorganismus-bezogenen Erkrankung des Pflanzenwachstums, umfassend ein Aufbringen auf das Pflanzenwachstum oder auf den Boden einer antimikrobiellen Zusammensetzung, die eine Kombination von antimikrobiell wirksamen Mengen aktiver Verbindungen umfasst, die wie folgt sind:
a) Formalin und
b) zwischen 100 ppm Imazalil oder Pitrizat oder eines Gemisches davon auf einen Teil Formalin und bis 60 Gew.-%.

2. Verfahren nach Anspruch 1, wobei die aktiven Verbindungen in inerten Trägermaterialien enthalten sind.

3. Verfahren nach Ansprach 1 oder 2, wobei die aktiven Verbindungen Formalin und Imazalil sind.

4. Verfahren nach Anspruch 1 oder 2, wobei die aktiven Verbindungen Formalin und Pitrizat sind.

5. Verfahren nach Anspruch 1 oder 2, wobei die aktiven Verbindungen Formalin und ein Gemisch aus Imazalil und Pitrizat sind.

6. Verfahren nach Anspruch 2, wobei der inerte Träger Paraformaldehyd, Harnstoffformaldehyd oder ein Gemisch davon ist.

7. Verfahren nach Anspruch 2, wobei der inerte Träger Talkum ist.

8. Verfahren nach Anspruch 2, wobei der inerte Träger ein organisches Lösungsmittel ist.

9. Verfahren nach den Ansprüchen 2 bis 8, wobei die Menge des inerten Trägers bis 70 Gew.-% beträgt.

10. Verfahren nach einem der Ansprüche 1 bis 9, wobei die antimikrobielle Zusammensetzung ferner eine oder mehrere Verbindung(en) umfasst, ausgewählt aus:
• Organophosphor-Nematiziden,
• Organophosphat-Nematiziden,
• Organothiophosphat-Nematiziden,
• nicht-klassifizierten Nematiziden,
• Fenamiphos,
• Cadusafos,
• Dezomet.

11. Verfahren nach einem der Ansprüche 1 bis 10, wobei die antimikrobielle Zusammensetzung auf den Boden durch Sprühen oder Bewässerung aufgebracht wird.

12. Verfahren nach einem der Ansprüche 1 bis 10, wobei der befallene Bereich mit einer Menge der antimikrobiellen Zusammensetzung von 100 1 pro 1000 m² bis 600 1 pro 1000 m² behandelt wird.

13. Verfahren nach einem der Ansprüche 1 bis 10, wobei der befallene Bereich mit einer Zusammensetzung behandelt wird, die eine Menge an Paraformaldehyd und Harnstoffformaldehyd von 40 kg/1000 m² bis 200 kg/1000 m² umfasst.

14. Antimikrobielle Zusammensetzung, die eine Kombination von antimikrobiell wirksamen Mengen an aktiven Verbindungen umfasst, die wie folgt sind:
a) Formalin und
b) zwischen 100 ppm Imazalil oder eines Gemisches davon mit Pitrizat auf einen Teil Formalin und bis 60 Gew.-%.

15. Antimikrobielle Zusammensetzung nach Anspruch 14, wobei die aktiven Verbindungen in inerten Trägermaterialien enthalten sind.

16. Antimikrobielle Zusammensetzung nach Anspruch 15, wobei der inerte Träger ausgewählt ist aus Paraformaldehyd, Harnstoffformaldehyd, Talkum, einem organischen Lösungsmittel oder einem Gemisch davon.

17. Antimikrobielle Zusammensetzung nach Anspruch 15 oder 16, wobei die Menge des inerten Trägers bis 70 Gew.-% beträgt.

18. Zusammensetzung nach einem der Ansprüche 14 bis 17, ferner umfassend eine oder mehrere Verbindung(en) ausgewählt aus:
• Organophosphor-Nematiziden,
• Organophosphat-Nematiziden,
• Organothiophosphat-Nematiziden,
• nicht-klassifizierten Nematiziden,
• Fenamiphos,
• Cadusafos,
• Dezomet.

19. Verwendung einer antimikrobiellen Zusammensetzung, die eine Kombination antimikrobiell wirksamer Mengen an aktiven Verbindungen umfasst, die wie folgt sind:
a) Formalin und
b) zwischen 100 ppm Imazalil oder Pitrizat oder eines Gemisches davon auf einen Teil Formalin und bis 60 Gew.-% für ein Aufbringen auf das Pflanzenwachstum oder auf den Boden, um mikrobielles Wachstum zu unterdrücken und eine Mikroorganismus-bezogene Erkrankung des Pflanzenwachstums zu vermeiden oder zu behandeln.

## Revendications

1. Procédé destiné à inhiber la croissance microbienne et à la prévention ou au traitement d'une maladie de la croissance végétale liée à un micro-organisme, comprenant l'application à un végétal en croissance ou au sol d'une composition antimicrobienne comprenant une combinaison de quantités antimicrobiennes efficaces de composés actifs, qui sont :
a) la formaline et
b) entre 100 ppm et jusqu'à 60 % en poids d'Imazalil ou de Pitrizate, ou leur mélange, pour une partie de formaline.

2. Procédé selon la revendication 1, dans lequel les composés actifs sont contenus dans des matériaux de support inertes.

3. Procédé selon la revendication 1 ou 2, dans lequel les composés actifs sont la formaline et l'Imazalil.

4. Procédé selon la revendication 1 ou 2, dans lequel les composés actifs sont la formaline et le Pitrizate.

5. Procédé selon la revendication 1 ou 2, dans lequel les composés actifs sont la formaline et un mélange d'Imazalil et de Pitrizate.

6. Procédé selon la revendication 2, dans lequel le support inerte est le para-formaldéhyde, l'urée-formaldéhyde ou leur mélange.

7. Procédé selon la revendication 2, dans lequel le support inerte est le talc.

8. Procédé selon la revendication 2, dans lequel le support inerte est un solvant organique.

9. Procédé selon les revendications 2 à 8, dans lequel la quantité de support inerte est au maximum de 70 % en poids.

10. Procédé selon l'une quelconque des revendications 1 à 9, dans lequel la composition antimicrobienne comprend en outre un ou plusieurs composés choisis parmi :
· les nématocides organophosphorés ;
· les nématocides organophosphate ;
· les nématocides organothiophosphate :
· les nématocides non classés :
· le fenamiphos ;
· le cadusafos ;
· le dezomet.

11. Procédé selon l'une quelconque des revendications 1 à 10, dans lequel la composition antimicrobienne est appliquée sur le sol par pulvérisation ou par irrigation.

12. Procédé selon l'une quelconque des revendications 1 à 10, dans lequel la zone contaminée est traitée avec une quantité de composition antimicrobienne comprise entre 100 litres pour 1000 m² et 600 litres pour 1000 m².

13. Procédé selon l'une quelconque des revendications 1 à 10, dans lequel la zone contaminée est traitée avec une composition comprenant une quantité de paraformaldéhyde et d'urée-formaldéhyde comprise entre 40kg/1000m² et 200 kg/1000 m².

14. Composition antimicrobienne comprenant une combinaison de quantités antimicrobiennes efficaces de composés actifs qui sont :
a) la formaline et
b) entre 100 ppm et jusqu'à 60 % en poids d'Imazalil ou d'un mélange de celui-ci avec le Pitrizate, pour une partie de formaline.

15. Composition antimicrobienne selon la revendication 14, dans laquelle les composés actifs sont contenus dans des matériaux de support inertes.

16. Composition antimicrobienne selon la revendication 15, dans laquelle le support inerte est choisi parmi le paraformaldéhyde, l'urée-formaldéhyde, le talc, un solvant organique, ou un mélange de ceux-ci.

17. Composition antimicrobienne selon la revendication 15 ou 16, dans laquelle la quantité de support inerte est au maximum de 70 % en poids.

18. Composition selon l'une quelconque des revendications 14 à 17, comprenant en outre un ou plusieurs composés choisis parmi :
· les nématocides organophosphorés ;
· les nématocides organophosphate ;
· les nématocides organothiophosphate :
· les nématocides non classés :
· le fenamiphos ;
· le cadusafos ;
· le dezomet.

19. Utilisation d'une composition antimicrobienne, comprenant une combinaison de quantités antimicrobiennes efficaces de composés actifs, qui sont :
a) la formaline et
b) entre 100 ppm et jusqu'à 60 % en poids d'Imazalil ou de Pitrizate, ou d'un mélange de ceux-ci, pour une partie de formaline, pour application à un végétal en croissance ou au sol pour inhiber la croissance microbienne et pour la prévention ou le traitement d'une maladie liée à un micro-organisme de ladite croissance végétale.
